# EUROPEAN PATENT APPLICATION

(11) **EP 1 675 104 A1**
(43) Date of publication of application: **28.06.2006**
(21) Application number: 05028202.9
(22) Date of filing: 22.12.2005
(51) Int. Cl.: G11B 5/596

(54) **Method, medium, and apparatus recording a servo pattern**

(30) Priority: 27.12.2004 KR 2004112904
(71) Applicant: Samsung Electronics Co., Ltd., Suwon-si, Gyeonggi-Do (KR)
(72) Inventor: Yang, Won-choul, Yongin-si Geonggi-do (KR); Cho, Keung-Youn, Namyangju-si Gyeonggi-do (KR)
(74) Representative: Grünecker, Kinkeldey, Stockmair & Schwanhäusser Anwaltssozietät

(57) **Abstract**

A method, medium, and apparatus recording a magnetic disk servo pattern. The method of recording a servo pattern, including servo information, on a magnetic disk may include an erasing of erase regions existing between burst signals contained in a burst signal recording zone of a servo pattern of the magnetic disk by applying an AC current signal of a predetermined frequency to the erase regions.

## Description

### CROSS-REFERENCE TO RELATED APPLICATIONS

This application claims the priority benefit of Korean Patent Application No. 10-2004-0112904, filed on December 27, 2004, in the Korean Intellectual Property Office, the disclosure of which is incorporated herein in its entirety by reference.

### BACKGROUND OF THE INVENTION

### 1. Field of the Invention

Embodiments of the present invention relate to a method, medium, and apparatus recording a magnetic disk servo, and more particularly, to a method, medium, and apparatus, reducing the generation of distortion of a burst signal contained in a servo pattern in a servo track write process.

### 2. Description of the Related Art

In a conventional method of recording servo information on a magnetic disk, as described in Japanese Patent Publication No. 1997-063217, a servo information recording technique is discussed where a burst pattern area is formed adjacent to the track direction and DC erase areas are formed confronting the magnetizing direction of the surface of a magnetic disk on track width direction edges, on both ends of each burst pattern.

A hard disk drive (HDD) is one of several types of data storage units and generally contributes to the operation of a computer system by enabling the reproduction and/or recording of data from/to a disk. As HDDs have the capability of high capacity, high density, and miniaturization, there have been gradual increases in BPI (bit per inch) densities in a disk rotational direction, with similar increases in TPI (track per inch) densities in a radius direction. According to such increases in densities, finer control of the HDD is required.

To read and write data from/to a desired position of a medium, e.g., a magnetic disk in an HDD, servo information for controlling a head position on the medium is required.

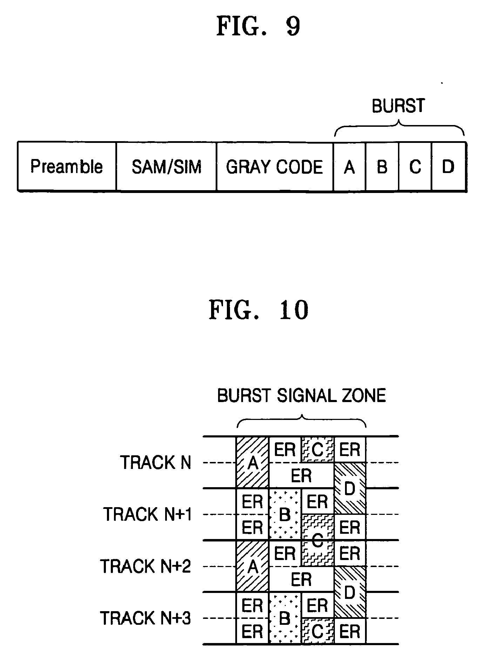

Such servo information may include a preamble, a servo address/index mark (SAM/SIM), a gray code, and bursts A, B, C, and D, as illustrated in FIG. 9 implementing an embodiment of the present invention. The preamble may be used to determine a constant timing margin by allocating a gap before a servo sector and to determine a gain through an automatic gain control (AGC). The SAM may be used to indicate the beginning of the servo sector, and the SIM may provide disk one-revolution information. The gray code may provide track and sector information, and the burst signals may be used to control the placement of a read/write head within a track.

A process of recording the servo information on a disk is called a servo track write process. Such a servo track write (STW) method may include an offline STW method, a reference servo track copy method, etc.

The offline STW method is a method of directly assembling disks, on which servo information has previously been written, within an HDD, i.e., without writing the disk servo information after assembly of the disks within the HDD.

The reference servo track copy method is a method of simultaneously writing the same reference servo pattern on all connected disk surfaces, in a blank write method, using an offline servo track writer while tracing servo tracks written on a reference disk, e.g., after the reference disk having prewritten servo information and blank disks not having the prewritten servo information are assembled with the HDD.

When a servo pattern, conventionally used in HDDs, is written on disks in a perpendicular magnetic recording method, blank areas between burst signals of the servo pattern are erased through the application of a DC current, which is called the DC-erase method.

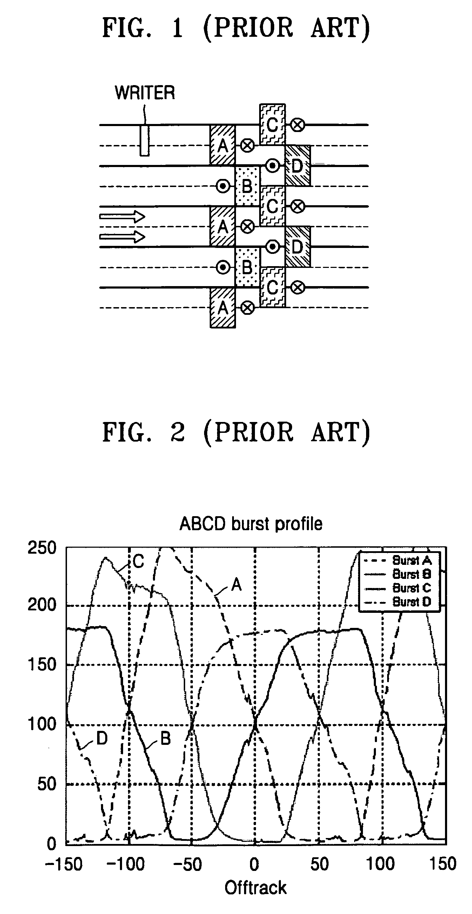

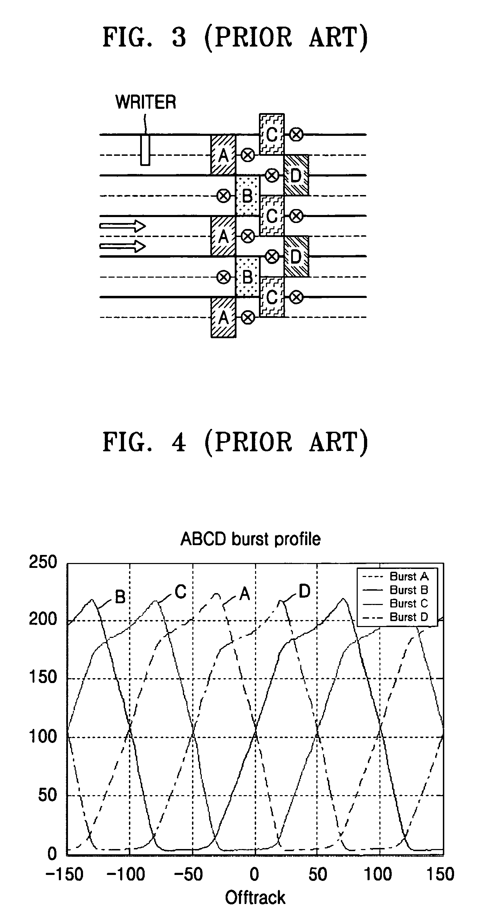

When servo information is written, the DC-erase method includes applying a DC-erase current by changing polarity of the DC-erase current in neighboring tracks, as illustrated in FIG. 1, and a method of applying a DC-erase current without changing the polarity of the DC-erase current, i.e., in a unipolar manner, as illustrated in FIG.3. In FIGS. 1 and 3 the writing head is illustrated as covering 71 % of a corresponding track pitch (TP).

When a servo track write process is performed using the method of changing the polarity of a DC-erase current, e.g., as shown in FIG. 1, if burst signals A, B, C, and D contained in a servo pattern are reproduced, as illustrated in FIG. 2, levels of the burst signals A, B, C, and D are not uniform, and distortion occurs.

When a servo track write process is performed using the method of not changing the polarity of a DC-erase current, e.g., as shown in FIG. 3, the burst signals A, B, C, and D are reproduced, as illustrated in FIG. 4, with an improved response over the polarity changed method shown in FIG. 2, but still with distortion occurring in the burst signals A, B, C, and D, as well an asymmetrical problem.

Thus, the distortion occurring in the burst signals A, B, C, and D affects a servo control characteristic, thereby decreasing servo performance.

### SUMMARY OF THE INVENTION

Embodiments of the present invention provides a method, medium, and apparatus recording a magnetic disk servo pattern to reduce distortion of burst signals by using an AC-erase method when the servo pattern is recorded.

To achieve the above and/or other aspects and advantages, embodiments of the present invention include a method of recording a reference servo pattern, including servo information, on a medium, including erasing at least one erase region existing between burst signals contained in a burst signal recording zone of the reference servo pattern by applying an AC current signal to the at least one erase region.

The AC current signal may be a predetermined frequency. Here, the predetermined frequency may be set to more than double a frequency of the burst signals.

The reference servo pattern may be previously recorded on a reference disk, and the recording of the reference servo pattern may include recording the reference servo pattern on another disk.

The method may further include reading the reference servo pattern from the reference disk and simultaneously performing the recording of the read reference servo pattern to the other disk.

To achieve the above and/or other aspects and advantages, embodiments of the present invention include a disk drive, including a controller to control a recording of servo pattern information onto a disk surface assembled in the disk drive, and a write/read circuit to record the servo pattern information and to erase an erase region existing between burst signals of a reference servo pattern by applying an AC current signal to the erase region.

The disk drive may further include a head disk assembly having a reference disk on which the reference servo pattern, produced in an offline operation, has been recorded and at least one blank disk as the assembled disk.

The controller may further read the reference servo pattern information recorded on the reference disk to record the read reference servo pattern information onto the at least one blank disk.

In addition, the recording of the read reference servo pattern may further include reading the servo pattern information recorded on the reference disk and simultaneously copying the read reference servo pattern information onto the at least one blank disk.

The reference servo pattern information recorded to the assembled disk may be read from a memory before being recorded to the assembled disk. In addition, the AC current signal is a predetermined frequency, and further, the predetermined frequency may be set to more than double a frequency of the burst signals of the reference servo pattern.

The erase region existing between burst signals of the reference servo may exist on a reference disk. Similarly, the erase region existing between burst signals of the reference servo may exist on a disk assembled in the disk drive as a blank disk.

To achieve the above and/or other aspects and advantages, embodiments of the present invention include a medium, including a plurality of annular tracks, each track having a plurality of sectors, with each sector including a data field storing data and a servo field having a recorded servo pattern, with AC-erase regions between burst signals contained in a burst signal recording zone of the servo field, erased through an AC current signal of a predetermined frequency.

Here, the predetermined frequency may be set to more than double a frequency of the burst signals. In addition, the medium may be a magnetic disk.

To achieve the above and/or other aspects and advantages, embodiments of the present invention include at least one medium including computer readable code to implement embodiments of the present invention.

Additional aspects and/or advantages of the invention will be set forth in part in the description which follows and, in part, will be apparent from the description, or may be learned by practice of the invention.

### BRIEF DESCRIPTION OF THE DRAWINGS

These and/or other aspects and advantages of the invention will become apparent and more readily appreciated from the following description of the embodiments, taken in conjunction with the accompanying drawings of which:
FIG. 1 illustrates a conventional burst signal recording zone on a disk in a servo write process using a positive/negative switching DC-erase method;
FIG. 2 graph illustrates a burst signal reproduction characteristic after a servo write process, using the conventional positive/negative switching DC-erase;
FIG. 3 illustrates a conventional burst signal recording zone on a disk in a servo write process using a unipolar DC-erase method;
FIG. 4 graphically illustrates a burst signal reproduction characteristic after a servo write process, using the conventional unipolar DC-erase;
FIG. 5 graphically illustrates bias shift characteristics of an AC-erase method, according to an embodiment of the present invention, compared with conventional DC-erase methods;
FIG. 6 illustrates an assembling state of a reference disk and blank disks in a head disk assembly of a reference servo track copy system, using an AC-erase method, according to an embodiment of the present invention;
FIG. 7 illustrates a head disk assembly of a disk drive, according to an embodiment of the present invention;
FIG. 8 illustrates an electrical circuit of a disk drive for a reference servo track copy, using an AC-erase method, according to an embodiment of the present invention;
FIG. 9 illustrates a servo pattern recorded in a disk drive, according to an embodiment of the present invention; and
FIG. 10 illustrates a recording state of a burst signal recording zone on a disk for a method of recording a servo pattern on a magnetic disk, according to an embodiment of the present invention.

### DETAILED DESCRIPTION OF THE PREFERRED EMBODIMENTS

Reference will now be made in detail to embodiments of the present invention, examples of which are illustrated in the accompanying drawings, wherein like reference numerals refer to the like elements throughout. Embodiments are described below to explain the present invention by referring to the figures.

A hard disk drive (HDD) may include a head disk assembly (HDA) having mechanical parts and an electrical circuit for the same.

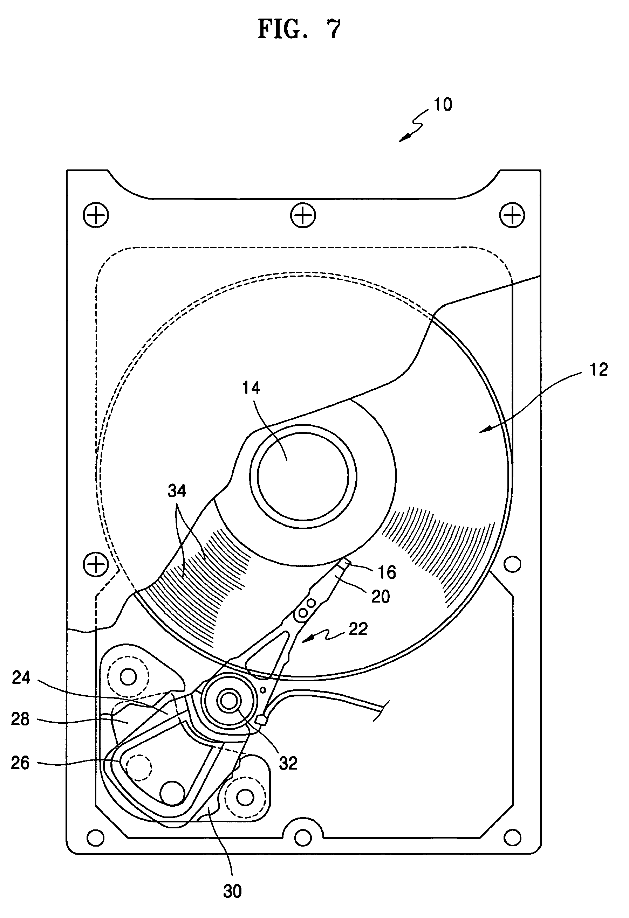

FIG. 7 illustrates an HDA 10 of a disk drive, according to an embodiment of the present invention. Referring to FIG. 7, the HDA 10 may include at least one magnetic disk 12 to be rotated by a spindle motor 14, with the HDA 10 including a transducer (not shown) to be adjacently located over a disc surface.

The transducer may read and/or write information from/to a rotating disk 12 by sensing a magnetic field of a portion of the disk 12 or through magnetizing a portion of the disk 12. Typically, the transducer may be associated with each disk surface in the HDD, though embodiments of the present invention are not limited thereto. In addition, though a single transducer has been described, the transducer may include a write transducer (a writer) for magnetizing the portion of the disk 12 and a separate read transducer (a reader) for sensing a magnetic field of the portion of the disk 12. The read transducer may also include a magnetoresistive (MR) component.

The transducer may be combined with a head 16, such that the head 16 generates an air bearing between the transducer and the disc surface. The head 16 may be combined with a head stack assembly (HSA) 22, with the HSA 22 being attached to an actuator arm 24 having a voice coil 26. The voice coil 26 may be located adjacent to a magnetic assembly 28, thereby making up a voice coil motor (VCM) 30. The current supplied to the voice coil 26 may generate a torque to rotate the actuator arm 24 around a bearing assembly 32, with the rotation of the actuator arm 24 moving the transducer across the disc surface.

Information may typically be stored in annular tracks 34 of the disk 12, and in general, each track 34 may include a plurality of sectors. Each sector may include a data field and a servo field, for example. The servo field may include servo information, illustrated in FIG. 9 of an embodiment of the present invention, e.g., containing a gray code for identifying sectors and tracks (cylinders) and burst signals. The transducer may move across a disc surface of the HDD to read or write information from/to different tracks.

In an embodiment of the present invention, erase regions (ERs) corresponding to blank areas existing between burst signals A, B, C, and D, for example, contained in a burst signal recording zone of a servo pattern, as illustrated in FIG. 10, may be erased by applying a high frequency AC current signal in a servo write process. According to an embodiment of the present invention, it may be effective if the frequency of the AC-erase current is set to more than double a frequency of a burst signal. For example, if the frequency of the burst signal is 50MHz, the frequency of the AC-erase current may be set to 100MHz, for example, noting that additional embodiments are equally available.

In an embodiment of the present invention, an operation of recording a servo pattern on the disk 12, using a reference servo track copy method, will now be described in greater detail. Of course, embodiments of the present invention may be applied to not only a reference servo track copy method, but also various STW methods.

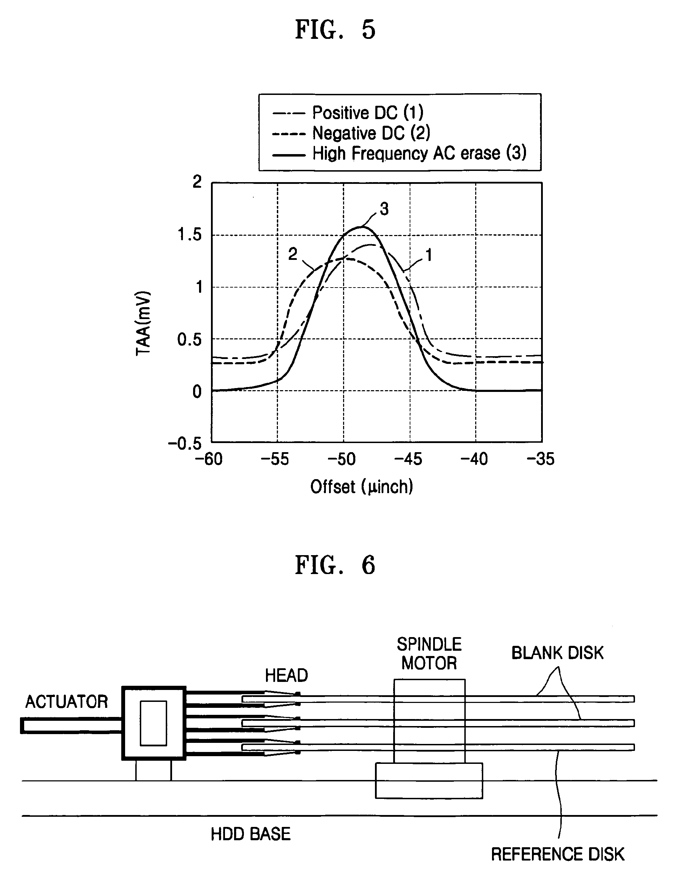

A reference servo track copy method may be used for the assembling of a reference disk and at least one blank disk, with the HDA 10 illustrated in FIG. 6, for example. In FIG. 6, only two blank disks are have been illustrated, solely for convenience of description.

According to an embodiment of the present invention, a servo pattern recorded on a disk of an HDD may be made up of a preamble, a servo address/index mark (SAM/SIM), a gray code, and bursts A, B, C, and D, for example, as illustrated in FIG. 9.

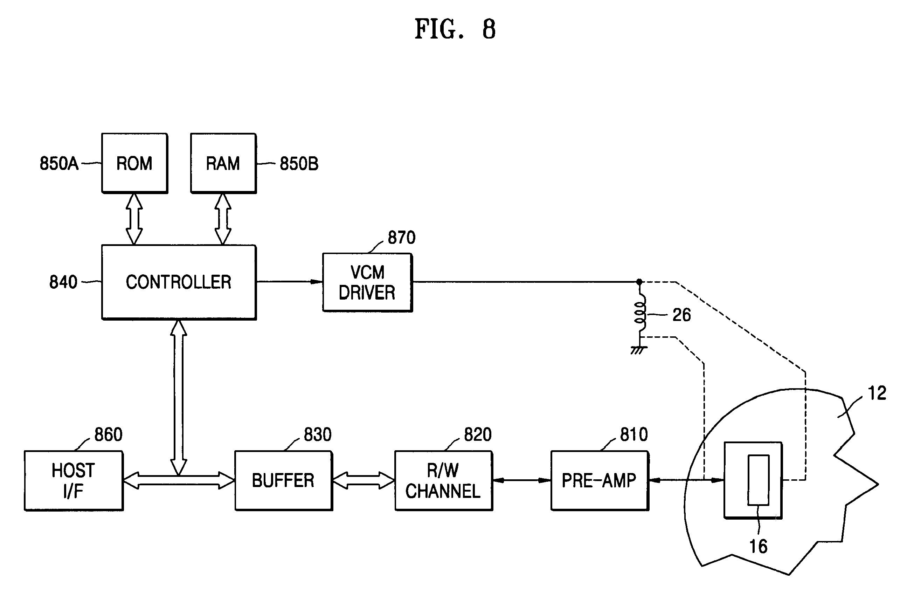

FIG. 8 illustrates an electrical circuit of a disk drive, according to an embodiment of the present invention, using a reference servo track copy method in which a high frequency AC-erase current is used.

Referring to FIG. 8, the disk drive may include a disk 12, a transducer 16, a pre-amplifier 810, a write/read (R/W) channel 820, a buffer 830, a controller 840, a read only memory (ROM) 850A, a random access memory (RAM) 850B, a host interface 860, and a VCM driver 870, for example.

A circuit including the pre-amplifier 810 and the R/W channel 820 may be called a R/W circuit, with the R/W circuit potentially including a high frequency AC-erase current generation circuit.

In an embodiment of the present invention, the ROM 850A may store firmware and control information for controlling the disk drive, and the RAM 850B may store therein information required to drive the disk drive, which may also be read from the ROM 850A or the disk 12 when the disk drive is initialized, for example.

A general operation of a disk drive, according to an embodiment of the present invention, will now be described in greater detail.

In a data read mode, the disk drive may amplify an electrical signal sensed by the transducer (head) 16 from the disk 12, in the pre-amplifier 810. The R/W channel 820 may encode the amplified analog signal into a digital signal readable by a host device (not shown), convert the digital signal to a data stream, temporarily store the data stream in the buffer 830, and transmit the stream data to the host device through the host interface 860. In a reference servo track copy mode, using the high frequency AC-erase current method according to an embodiment of the present invention, reference servo information read from the reference disk may be sequentially stored in the buffer 830, for example.

In a data write mode, the disk drive may receive data from the host device through the host interface 860, temporarily store the received data in the buffer 830, convert the data stored in the buffer 830 to a binary data stream suitable for a write channel using the R/W channel 820 by sequentially outputting the data stored in the buffer 830, and record the binary data stream on the disk 12 through the transducer 16 using a write current amplified by the pre-amplifier 810. In the reference servo track copy mode using a high frequency AC-erase current method, according to an embodiment of the present invention, the pre-amplifier 810 may output a high frequency AC-erase current signal to the transducer 16 in erase regions (ERs) existing between burst signals A, B, C, and D, for example, contained in a burst signal recording zone of a reference servo pattern, as illustrated in FIG. 10.

The reference servo information, read from a reference disk in the reference servo track copy mode, for example, may be sequentially stored in the buffer 830 and output in a first-in first-out (FIFO) method.

The controller 840 may analyze a command received from the host device, through the host interface 860 and perform a control corresponding to the analyzed result. When a series of commands for performing the reference servo track copy process are received from the host device, the controller 840 may control the electrical circuit to erase the ERs existing between burst signals A, B, C, and D, for example, contained in the burst signal recording zone of the reference servo pattern by applying the high frequency AC-erase current signal to the ERs, according to an embodiment of the present invention.

Here, when the burst signals A, B, C, and D are reproduced, the high frequency AC current signal recorded between the burst signals A, B, C, and D may be removed since the high frequency signal corresponds to a high frequency exceeding a cut off frequency of a filter (not shown) included in the R/W channel 820, for example.

Likewise, according to an embodiment of the present invention, in a servo write process, blank areas between burst signals may be erased using such a high frequency AC-erase current signal.

FIG. 5 graphically illustrates differences in track direction bias shift characteristics of a reader for a high frequency AC-erase method (illustrated as erase method 3), according to an embodiment of the present invention, a conventional positive DC-erase method (illustrated as erase method 1), and a conventional negative DC-erase method (illustrated as erase method 2).

FIG. 5 illustrates that the bias shift is improved in a servo write process when using the high frequency AC-erase method, according to an embodiment of the present invention, compared to when using the conventional positive DC-erase and negative DC-erase methods.

Embodiments of the present invention may be realized as a method, an apparatus, and/or a system. In addition, embodiments of the present invention may be realized as computer readable code, e.g., software, implementing components of the present invention, e.g., as embodied as code segments to implement desired operations. The computer readable code may be stored in a medium, e.g., a processor readable recording medium, and transmitted as computer data signals combined with a carrier using a transmission medium or a communication network, for example. The medium may be any data storage device that can store and/or transmit data which can be thereafter read by a computer system. Examples of the media include electronic circuits, semiconductor memory devices, read-only memory (ROM), flash memory, erasable ROM, floppy disks, optical discs, hard discs, optical fiber media, and RF networks, for example. The computer data signals may further include any signal which can be propagated via transmission media such as electronic network channels, optical fibres, air, electronic fields, RF networks, for example.

In addition, embodiments of the present invention may be applied to various types of disk drives, including HDDs, as well as various alternate types of data storage devices.

As described above, according to an embodiment of the present invention, by erasing blank areas between burst signals in a servo write process, using a high frequency AC signal, occurrences of asymmetricity and distortion of reproduced burst signals can be reduced, thereby increasing servo control performance.

Although a few embodiments of the present invention have been shown and described, it would be appreciated by those skilled in the art that changes may be made in these embodiments without departing from the principles and spirit of the invention, the scope of which is defined in the claims and their equivalents.

## Claims

1. A method of recording a reference servo pattern, including servo information, on a medium, comprising erasing at least one erase region existing between burst signals contained in a burst signal recording zone of the reference servo pattern by applying an AC current signal to the at least one erase region.

2. The method of claim 1, wherein the AC current signal is a predetermined frequency.

3. The method of claim 2, wherein the predetermined frequency is set to more than double a frequency of the burst signals.

4. The method of claim 1, wherein the reference servo pattern is previously recorded on a reference disk, and the recording of the reference servo pattern comprises recording the reference servo pattern on another disk.

5. The method of claim 4, further comprising reading the reference servo pattern from the reference disk and simultaneously performing the recording of the read reference servo pattern to the other disk.

6. A disk drive, comprising:
a controller to control a recording of servo pattern information onto a disk surface assembled in the disk drive; and
a write/read circuit to record the servo pattern information and to erase an erase region existing between burst signals of a reference servo pattern by applying an AC current signal to the erase region.

7. The disk drive of claim 6, further comprising a head disk assembly comprising a reference disk on which the reference servo pattern, produced in an offline operation, has been recorded and at least one blank disk as the assembled disk.

8. The disk drive of claim 7, wherein the controller further reads the reference servo pattern information recorded on the reference disk to record the read reference servo pattern information onto the at least one blank disk.

9. The disk drive of claim 8, wherein the recording of the read reference servo pattern further comprises reading the servo pattern information recorded on the reference disk and simultaneously copying the read reference servo pattern information onto the at least one blank disk.

10. The disk drive of claim 6, wherein the reference servo pattern information recorded to the assembled disk is read from a memory before being recorded to the assembled disk.

11. The disk drive of claim 6, wherein the AC current signal is a predetermined frequency.

12. The disk drive of claim 11, wherein the predetermined frequency is set to more than double a frequency of the burst signals of the reference servo pattern.

13. The disk drive of claim 6, wherein the erase region existing between burst signals of the reference servo exists on a reference disk.

14. The disk drive of claim 6, wherein the erase region existing between burst signals of the reference servo exists on a disk assembled in the disk drive as a blank disk.

15. A medium, comprising a plurality of annular tracks, each track comprising a plurality of sectors, with each sector comprising a data field storing data and a servo field comprising a recorded servo pattern, with AC-erase regions between burst signals contained in a burst signal recording zone of the servo field, erased through an AC current signal of a predetermined frequency.

16. The medium of claim 15, wherein the predetermined frequency is set to more than double a frequency of the burst signals.

17. The medium of claim 15, wherein the medium is a magnetic disk.

18. At least one medium comprising computer readable code to implement the method of claim 1.
